# EUROPEAN PATENT SPECIFICATION

(11) **EP 0 370 569 B1**
(45) Date of publication and mention of the grant of the patent: **09.02.1994**
(21) Application number: 89202910.9
(22) Date of filing: 16.11.1989
(51) Int. Cl.: G01N 21/88

(54) **A method and an apparatus for checking an object for the presence of filling compound**
Verfahren und Vorrichtung zur Verifikation der Anwesenheit einer Füllzusammensetzung in einem Gegenstand
Procédé et appareil pour vérifier dans un objet la présence d'une composition de remplissage

(30) Priority: 21.11.1988 NL 8802870
(43) Date of publication of application: 30.05.1990
(73) Proprietor: HEUFT SYSTEMTECHNIK GMBH, D-56659 Burgbrohl (DE)
(72) Inventor: Swart, Nicolaas Cornelis, NL-7422 MT Deventer (NL)
(74) Representative: Gritschneder, Martin, Dipl.-Phys.

(56) References cited:
- GB-A- 2 204 125
- US-A- 4 037 724
- PATENT ABSTRACTS OF JAPAN, vol. 1, no. 110 (E-77)[4025], 1977, page 4025 E-77; & JP-A-52 43 484
- PATENT ABSTRACTS OF JAPAN, vol. 8, no. 108 (P-302)[1645], 21st September 1984, page 108 P 302; & JP-A-59 92 333
- PATENT ABSTRACTS OF JAPAN, vol. 10, no. 57 (P-434)[2114], 7th March 1986, page 89 P 434; & JP-A-60 201 241

## Description

The invention relates to a method for inspecting the filling with sealing compound of a gutter present in an object, e.g. a metal lid, said method comprising the steps of:
(1) providing an object to be inspected;
(2) directing a light beam on said gutter;
(3) previously determining the shape of the reflection picture of at least said gutter of an object satisfying a predetermined standard;
(4) determining the picture of said gutter;
(5) comparing the results of steps (3) and (4) and generating a rejection signal in case of a detected deviation outside a chosen tolerance range.

Such an apparatus is known from GB-A-2 204 125.

The irradiation of two light beams according to this prior art specification takes place such that the light beams are incident at an angle of inclination such that their principal axes intersect at the center of concentricity. Thereby predetermined sectors of the surface to be illuminated are irradiated by the respective beams.

It is a purpose of the invention to allow inspection of the whole gutter simultaneously, without the need of successive illuminations under various angles or rotation of the objects to be inspected.

Furthermore it should be noted that the two light beams directed to the object in accordance with GB-A-2 204 125 can be considered as converging beams relative to the positioning of the object.

In view of the above, the invention relates to a method of the above specified type which is characterized in that step (2) is carried out such that the two light beams illuminate the gutter from two directions intersecting perpendicularly the direction in which the gutter runs at their points of incidence with said gutter and forming an angle with the plane of the gutter between 45° and 90°, and 135° and 90° respectively.

Also, from GB-A-2 204 125 an apparatus is known for carrying out the prior art method for inspecting the filling with sealing compound of a gutter present in an object, e.g. a metal lid, said apparatus comprising:
(1) a light source;
(2) directing means for directing two light beams emanating from said light source on said gutter;
(3) memory means for storing the reflection image of at least said gutter of an object satisfying a predetermined standard;
(4) sensing means for determining the image of said gutter;
(5) comparing means for comparing the output signals of said sensing means and said memory means and generating a rejection signal in case of a determined deviation beyond a chosen tolerance range.

According to the invention this apparatus is characterized in that the light source illuminates the gutter of an object to be inspected directly with a diverging beam and, through reflection via a mirror positioned coaxially relative to the gutter, with a converging beam.

In a specific, practical embodiment the apparatus is characterized in that the light source illuminates the gutter of an object to be inspected directly with a diverging beam and, through reflection via a mirror positioned coaxially relative to the gutter, with a converging beam.

If such an apparatus is used for inspecting round objects it may be characterized in that the mirror is substantially cylindrical.

Advantageously the apparatus of the invention may be characterized by a housing enclosing the light source, the directing means and the sensing means, the illumination and sensing of the lids taking place through a glass plate arranged under an angle such as to prevent light reflected thereby from reaching the sensing means.

The invention will now be explained with reference to the accompanying drawings. In the drawings:
Figure 1 is a schematic sectional view of an apparatus according to the invention; and
Figure 2 is the detail II of figure 1.

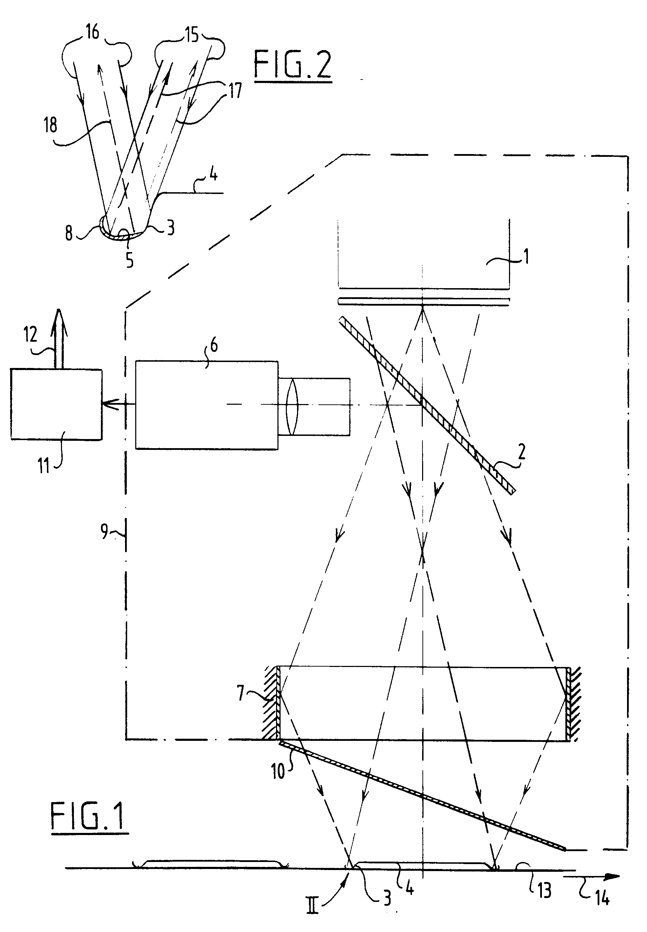

Figure 1 shows a lamp 1, in this case a stroboscope-lamp, which via a half-transparant mirror 2 illuminates the gutter 3 of a lid 4, in which filling compound 5 has been applied (see figure 2). On places where this filling mass or compound 5 is absent, the reflection of the light by the bottom of the gutter will be substantially stronger than in case of filling compound 5 being present.

A video-camera 6 senses the gutter 5 by means of reflection through the half-transparant mirror 2. If gutter 3 is in accordance with the standard filled with filling compound 5, the video-camera 6 senses a dark annular gutter. Regions with lacking filling compound can be sensed as bright spots in this ring, which can readily be detected by means of existing techniques for processing pictures.

The reflection direction of the light is dependent on the angular position of the reflecting surface. Since the reflection of light directly emanating from lamp 1 from the inner side of gutter 3 is directed in a direction outside the angle of view of the camera, there no lacking filling compound will be detected.

By illuminating said surface from an other direction by means of a cylindrical mirror 7 the mentioned area, in this case of lacking of filling compound 5, will also reflect light in the direction of camera 6.

Also other defects of gutter 3 affecting the picture of the edge zone sensed by camera 6 can in this arrangement be detected. This is e.g. the case with too low an upstanding edge 8 of gutter 3.

In order to safeguard the optical apparatus against external influences, such as dust, water, etc. the optical parts 1, 2, 6, 7 are enclosed by a closed housing 9. Through a glass plate 10 the lid 4 is illuminated and sensed. This glass plate 10 is arranged under an angle in order to avoid that light reflected by glass plate 10 reaches the video-camera 6.

A signal processing unit 11 receives the video signals from video-camera 6, which signals correspond with the picture of the gutter 3. This signal processing unit 11 comprises a memory, in which previously the shape of the reflection picture of the gutter in case of a lid satisfying a predetermined standard is stored. Also the signal processing unit 11 comprises comparing means for comparing the output signal of the video-camera and the contents of said memory. These comparing means generate a rejection signal in case of a detected deviation outside a chosen tolerance range. The rejection signal can be supplied through an output 12 to eject-means (not-shown) adapted to eject the lid in question from a continuous flow of lids, which are successively inspected by the apparatus according to the invention.

In such an apparatus the lids are successively transported on conveyor 13 in the directon of arrow 14 below the glass plate 10 serving as a window. In a manner known per se e.g. an approach switch or other suitable detection-instrument triggers in response to the arrival at the correct position of a lid 4 the stroboscope lamp 1 that emits a flash in response thereon. This flash takes care of the described illumination of lid 4 and the forming of the video-picture of the lid 4.

In figure 2 some light beams are shown for explanation, in a strongly schematized fashion. The light beam indicated with 15 is directly emitted by lamp 1. The beam indicated with 16 comes from cylindrical mirror 7. The reflection beams 17 indicated with interrupted lines are within the viewing angle of the video-camera 6, whilst the diverging beam 18 is outside that angle. It should, therefore, be understood that camera 6 is optically adjusted such that it is able to see a full picture of the lid 4 via the half-transparant mirror 2. Therefore, the reflected beam 18 is outside the field of view of the camera.

## Claims

1. A method for inspecting the filling with sealing compound of a gutter present in an object, e.g. a metal lid, said method comprising the steps of:
(1) providing an object to be inspected;
(2) directing a light beam on said gutter;
(3) previously determining the shape of the reflection picture of at least said gutter of an object satisfying a predetermined standard;
(4) determining the picture of said gutter;
(5) comparing the results of steps (3) and (4) and generating a rejection signal in case of a detected deviation outside a chosen tolerance range,
characterized in that step (2) is carried out such that two light beams (15, 16) illuminate the gutter (3) from two directions intersecting perpendicularly the direction in which the gutter (3) runs at their points of incidence with said gutter (3) and forming an angle with the plane of the gutter between 45° and 90°, and 135° and 90° respectively.

2. An apparatus for carrying out the method of claim 1 for inspecting the filling with sealing compound of a gutter (3) present in an object, e.g. a metal lid (4), said apparatus comprising:
(1) a light source (1, 7);
(2) directing means for directing two light beams (15, 16) emanating from said light source (1, 7) on said gutter (3);
(3) memory means (11) for storing the reflection image of at least said gutter (3) of an object (4) satisfying a predetermined standard;
(4) sensing means (6) for determining the image of said gutter (3);
(5) comparing means (11) for comparing the output signals of said sensing means (6) and said memory means (11) and generating a rejection signal (12) in case of a determined deviation beyond a chosen tolerance range;
characterized in that the light source illuminates the gutter (3) of an object (4) to be inspected directly with a diverging beam (15) and, through reflection via a mirror (7) positioned coaxially relative to the gutter (3), with a converging beam (16).

3. The apparatus according to claim 2 for inspecting round objects, characterized in that the mirror is substantially cylindrical.

4. The apparatus according to claim 2, characterized by a housing (9) enclosing the light source (1, 7), the directing means and the sensing means (6), the illumination and sensing of the lids (4) taking place through a glass plate (10) arranged under an angle such as to prevent light reflected thereby from reaching the sensing means (6).

## Patentansprüche

1. Verfahren zum Inspizieren des Füllens einer in einem Gegenstand, z.B. einem Metalldeckel, vorhandenen Rinne mit Dichtungsmasse, wobei das Verfahren folgende Schritte umfaßt:
(1) Zurverfügungstellen eines zu inspizierenden Gegenstandes;
(2) Richten eines Lichtstrahls auf die Rinne;
(3) Vorheriges Bestimmen der Form des Reflexionsbildes wenigstens der Rinne eines Gegenstandes, der einen vorgegebenen Standard erfüllt;
(4) Bestimmen des Bildes der Rinne;
(5) Vergleichen der Ergebnisse der Schritte (3) und (4) und Erzeugen eines Zurückweisungssignals, falls die festgestellte Abweichung außerhalb eines gewählten Toleranzbereiches liegt;
dadurch gekennzeichnet, daß Schritt (4) in der Weise durchgeführt wird, daß zwei Lichtstrahlen (15, 16) die Rinne (3) aus zwei Richtungen beleuchten, die an den Punkten ihres Auftreffens auf die Rinne (3) die Richtung, in der sich die Rinne (3) bewegt, rechtwinklig schneiden und mit der Ebene der Rinne einen Winkel zwischen 45° und 90° bzw. 135° und 90° bilden.

2. Vorrichtung zur Durchführung des Verfahrens nach Anspruch 1 zum Inspizieren des Füllens einer in einem Gegenstand, z.B. einem Metallverschluß (4), vorhandenen Rinne (3) mit einer Dichtungsmasse, mit
(1) einer Lichtquelle (1, 7);
(2) einer Einrichtung zum Richten von zwei Lichtstrahlen (15, 16), die von der Lichtquelle (1, 7) ausgehen, auf die Rinne (3);
(3) einer Speichereinrichtung (11) zum Speichern des Reflexionsbildes wenigstens der Rinne (3) eines Gegenstandes (4), der einen vorgegebenen Standard erfüllt;
(4) einer Sensoreinrichtung (6) zum Bestimmen des Bildes der Rinne (3);
(5) einer Vergleichseinrichtung (11) zum Vergleichen der Ausgangssignale der Sensoreinrichtung (6) und der Speichereinrichtung (11) und zum Erzeugen eines Zurückweisungssignals (12), falls eine festgestellte Abweichung jenseits eines gewählten Toleranzbereiches liegt;
dadurch gekennzeichnet, daß die Lichtquelle die Rinne (3) eines zu inspizierenden Gegenstandes (4) unmittelbar mit einem divergierenden Strahl (15) und durch Reflexion an einem Spiegel (7), der koaxial zu der Rinne (3) angeordnet ist, mit einem konvergierenden Strahl (16) beleuchtet.

3. Vorrichtung nach Anspruch 2 zum Inspizieren runder Gegenstände, dadurch gekennzeichnet, daß der Spiegel im wesentlichen zylindrisch ist.

4. Vorrichtung nach Anspruch 2, gekennzeichnet durch ein Gehäuse (9), das die Lichtquelle (1, 7), die Einrichtung zum Richten von zwei Lichtstrahlen und die Sensoreinrichtung (6) einschließt, wobei das Beleuchten und Abtasten des Deckels (4) durch eine Glasplatte (10) hindurch stattfindet, die unter einem Winkel angeordnet ist, so daß reflektiertes Licht daran gehindert wird, die Sensoreinrichtung (6) zu erreichen.

## Revendications

1. Procédé pour vérifier le remplissage, avec une composition d'étanchéité, d'une gouttière présente dans un objet, par exemple un couvercle en métal, ledit procédé comprenant les étapes de :
(1) préparation d'un objet à inspecter ;
(2) direction d'un faisceau de lumière sur ladite gouttière ;
(3) détermination préalable de la forme de l'image de réflexion d'au moins ladite gouttière d'un objet satisfaisant à une norme prédéterminée ;
(4) détermination de l'image de ladite gouttière ; et
(5) comparaison des résultats des étapes (3) et (4) et génération d'un signal de rejet dans le cas où on détecte un écart en dehors d'une plage de tolérance choisie ;
caractérisé en ce que l'étape (2) est effectuée de sorte que deux faisceaux lumineux (15,16) éclairent la gouttière (3) suivant deux directions qui coupent perpendiculairement la direction dans laquelle s'étend la gouttière (3), a leurs points d'incidence avec ladite gouttière (3), et qui forment un angle avec le plan de la gouttière compris entre 45° et 90°, et entre 135° et 90°, respectivement.

2. Appareil pour la mise en oeuvre du procédé de la revendication 1, pour la vérification du remplissage avec une composition d'étanchéité d'une gouttière (3) présente dans un objet, par exemple un couvercle en métal (4), ledit appareil comprenant :
(1) une source de lumière (1,7) ;
(2) des moyens de direction pour diriger deux faisceaux lumineux (15,16) émanant de ladite source de lumière (1,7) sur ladite gouttière (3) ;
(3) des moyens de mémoire (11) pour stocker l'image de réflexion d'au moins ladite gouttière (3) d'un objet (4) satisfaisant à une norme prédéterminée ;
(4) des moyens de détection (6) pour déterminer l'image de ladite gouttière ; et
(5) des moyens de comparaison (11) pour comparer les signaux de sortie desdits moyens de détection (6) et desdits moyens de mémoire (11) et engendrer un signal de rejet (12) dans le cas d'un écart déterminé en dehors d'une plage de tolérance choisie ;
caractérisé en ce que la source de lumière éclaire la gouttière (3) d'un objet (4) à inspecter directement avec un faisceau divergent (15) et, par réflexion au moyen d'un miroir (7) disposé coaxialement par rapport à la gouttière (3),avec un faisceau convergent (16).

3. Appareil suivant la revendication 2, pour l'inspection d'objets ronds, caractérisé en ce que le miroir est sensiblement cylindrique.

4. Appareil suivant la revendication 2, caractérisé en ce qu'il comprend un boîtier (9) entourant la source de lumière (1,7), les moyens de direction et les moyens de détection (6), l'éclairage et la détection de couvercles (4) s'effectuant à travers une plaque de verre (10) inclinée d'un angle tel que la lumière ainsi réfléchie ne peut pas atteindre les moyens de détection (6).
